(19)

Europäisches Patentamt
European Patent Office
Office européen des brevets

(11) Veröffentlichungsnummer: **0 516 865 A1**

(12) **EUROPÄISCHE PATENTANMELDUNG veröffentlicht nach Art. 158 Abs. 3 EPÜ**

(21) Anmeldenummer: **92903355.3**

(22) Anmeldetag: **26.11.91**

(86) Internationale Anmeldenummer: **PCT/SU91/00249**

(87) Internationale Veröffentlichungsnummer: **WO 92/11965 (23.07.92 92/19)**

(51) Int. Cl.5: **B23C 1/00**, B23C 3/00, B27C 5/00

(30) Priorität: **27.12.90 SU 4891694**

(43) Veröffentlichungstag der Anmeldung: **09.12.92 Patentblatt 92/50**

(84) Benannte Vertragsstaaten: **DE IT**

(71) Anmelder: **OVECHKIN, Pavel Vasilievich**
**ul. Molostovykh, 4-2-204**
**Moscow, 111578(SU)**
Anmelder: **ASTAKHOV, Andrei Vladimirovich**
**ul. Marshala Ustinova, 12-5-723**
**Moscow, 121360(SU)**

(72) Erfinder: **OVECHKIN, Pavel Vasilievich**
**ul. Molostovykh, 4-2-204**
**Moscow, 111578(SU)**
Erfinder: **ASTAKHOV, Andrei Vladimirovich**
**ul. Marshala Ustinova, 12-5-723**
**Moscow, 121360(SU)**

(74) Vertreter: **Finck, Dieter et al**
**Patentanwälte v. Füner, Ebbinghaus, Finck**
**Mariahilfplatz 2 & 3**
**W-8000 München 90(DE)**

(54) **FRÄSMASCHINE.**

(57) Die Fräsmaschine besitzt eine Vorrichtung (7) zur Gewährleistung der Relativbewegung von Arbeitstisch (3) und Plattform (5), die mindestens zwei Exzenterpaare (8, 10; 9, 11) darstellt, welche zu beiden Seiten der Bewegungsbahn (0 - 0) des Arbeitstisches (3) angebracht sind. Der innere Exzenter (8, 10) jedes Paars ist innerhalb des anderen, in der den Spindelkopf (6) tragenden Plattform (5) befindlichen äusseren Exzenters (9, 11) mit Möglichkeit der Drehung und Fixierung seiner Lage in bezug auf den äusseren Exzenter (9, 11) angeordnet und steht mit dem Antrieb (2) zur Bewegung des Arbeitstisches (3) relativ zum Bett (1) in kinematischer Verbindung.

EP 0 516 865 A1

A
54
25
34
33
53
6
30
29
31
32
5
37
35
38
43
III
III
7
42
44
55
56
20
22
4
51
51
21
11
36
23
8
12
13
52
47
3
48
52
15
14
17
16
49
18
50
1
19
2
FIG.1

## Technisches Gebiet

Die Erfindung bezieht sich auf das Gebiet des Maschinenbaus, insbesondere auf Fräsmaschinen.

## Zugrundeliegender Stand der Technik

Es sind gut bekannt Fräsmaschinen zum Fräsen von figurellen Nuten und Hersteilen von komplizierten und sich wiederholenden Bildern und Reliefs. Üblicherweise wird jede Arbeitsbewegung des Tisches und der Arbeitsspindeln in solchen Werkzeugmaschinen mit Hilfe eines Einzelantriebs mit Computer-Steuerung bewerkstelligt. Ein derartiges System erfordert das Vorhandensein in der Maschine einer grossen Anzahl von steuerbaren Elektroantrieben und eines komplizierten elektronischen Steuerungssystems mit einer zentralen Prozessoreinheit, einem Geber und anderen Elementen des automatischen Steuerungssystems. Dies hat einen erhöhten Elektroenergieverbrauch, eine Vergrösserung des Gewichts zur Folge, erschwert die Bedienung und erhöht den Preis der Werkzeugmaschine.

Bekannt ist eine Fräsmaschine, die ein Bett, einen Arbeitstisch zum Aufspannen von Werkstükken, welcher auf dem Bett bewegbar angeordnet ist und einen Antrieb zur Bewegung relativ zum Bett besitzt, eine Plattform, die bewegbar relativ zum Bett montiert ist und mindestens einen zur Befestigung des Arbeitswerkzeuges bestimmten Spindelkopf trägt, und eine Vorrichtung zur Gewährleistung der Relativbewegung von Arbeitstisch und Plattform enthält (SU, A, 1511124). Diese Maschine hat eine einfache Bauart, und ihre Arbeitsbewegungen werden durch rein mechanische Mittel von nur einem Antrieb besorgt. Die Vorrichtung zur Gewährleistung der Relativbewegung von Arbeitstisch und Plattform ist in Form von einem Exzenterpaar und horizontalen und vertikalen Platten ausgeführt, die in den Führungen der horizontalen Platten angeordnet sind und die Bewegung zu der die Spindelköpfe tragenden Plattform übertragen. Ein Nachteil dieser Maschine besteht darin, dass es unmöglich ist, krummlinige Bilder und komplizierte Reliefs wegen einer begrenzten Anzahl der Arbeitsbewegungen der Plattform und der Spindelköpfe herzustellen. Überdies besitzt die Maschine eine sperrige Vorrichtung zur Gewährleistung der Relativbewegung von Arbeitstisch und Plattform, welche Vorrichtung eine Verlustquelle der mechanischen Energie des Antriebs infolge der Reibung der vertikalen Platten in den Führungen darstellt. Dies macht die Maschine ineffektiv und unzuverlässig im Betrieb.

## Offenbarung der Erfindung

Der Erfindung liegt die Aufgabe zugrunde, eine Fräsmaschine zu schaffen, bei der die Vorrichtung zur Gewährleistung der Relativbewegung von Arbeitstisch und Plattform so ausgeführt ist, um eine Vielzahl verschiedener Kombinationen der Arbeitsbewegungen von Werkzeugmaschinenelementen auf rein mechanischem Wege sicherzustellen.

Die gestellte Aufgabe wird dadurch gelöst, dass in der Fräsmaschine, die ein Bett, einen Arbeitstisch zur Aufbeitstisch zur Aufspannung von Werkstücken, der auf dem Bett bewegbar angeordnet ist und einen Antrieb zur Bewegung relativ zum Bett besitzt, eine Plattform, die bewegbar relativ zum Bett montiert ist und mindestens einen zur Befestigung des Arbeitswerkzeuges bestimmten Spindelkopf trägt, und eine Vorrichtung zur Gewährleistung der Relativbewegung von Arbeitstisch und Plattform enthält, erfindungsgemäss die Vorrichtung zur Gewährleistung der Relativbewegung von Arbeitstisch und Plattform in Form mindestens zweier Exzenterpaare ausgeführt ist, die zu beiden Seiten der Bewegungsbahn des Arbeitstisches angebracht sind, wobei der eine, der innere Exzenter jedes Paars innerhalb des anderen, in der den Spindelkopf tragenden Plattform befindlichen äusseren Exzenters mit Möglichkeit der Drehung und Fixierung seiner Lage in bezug auf den äusseren Exzenter angeordnet und mit dem Bewegungsantrieb des Arbeitstisches relativ zum Bett kinematisch verbunden ist. Der Spindelkopf ist gegenüber der Plattform verschiebbar angeordnet und besitzt eine mit einem der Exzenter kinematisch verbundene Vorrichtung zur Verschiebung desselben relativ zur Plattform.

Bei einem solchen Aufbau wird eine uneendliche Anzahl der Varianten von Kombinationen der Exzentrizitäten zweier Exzenter sichergestellt, was es ermöglicht, beliebige Varianten des wiederholten geometrischen Bildes auf einer zu bearbeitenden Oberfläche zu erhalten. In Kombination mit der Verschiebung des Spindekopfes von demselben Antrieb wird eine zusätzliche unendliche Anzahl von Bildvarianten gewährleistet, wobei alle Arbeitsbewegungen der Maschine von ein und demselben Antrieb mit Hilfe von rein mechanischen Mitteln bewerkstelligt werden.

Die äusseren Exzenter sind vorzugsweise in der Plattform mit Möglichkeit ihrer Drehung und Fixierung ihrer Lage in bezug auf die Plattform angeordnet. Dabei wird die Regelung zur Änderung der Kombination der Exzentrizitäten der Exzenter vereinfacht.

Die Vorrichtung zur Verschiebung des Spindelkopfes relativ zur Plattform enthält vorzugsweise einen Mitnehmer, der auf dem inneren Exzenter mit Möglichkeit der Drehung und Fixierung seiner Lage in bezug auf den inneren Exzenter angeordnet ist. Hierbei wird eine Regelung der Verschiebungsphase des Spindelkopfes sichergestellt.

Die äusseren Exzenter sind vorzugsweise kinematisch miteinander verbunden. Dabei wird die Genauigkeit der Exzentrizitätsregelung gewährleistet.

Jeder äussere Exzenter ist vorzugsweise mit einer aussenliegenden Kurvenfläche ausgeführt, die einen Anstieg in der zur Arbeitstischfläche senkrechten Richtung aufweist, während die Plattform einen Mitnehmer zum Zusammenwirken mit der genannten Kurvenfläche besitzt.

Hierbei wird eine Zusatzbewegung der Plattform mit den Spindelköpfen von demselben Antrieb zur Erzeilung von komplizierten Oberflächenreiliefs sichergestellt.

Jeder ässere Exzenter besitzt vorzugsweise ein Schneckenrad, das gemeinsam mit der Plattform bewegbar und relativ zur Plattform drehbar ist, und ein Mitnehmer ist in diesem Schneckenrad starr befestigt, wobei in der Plattform drehbar ist, und ein Mitnehmer ist in diesem Schneckenrad starr befestigt, wobei in der Plattform eine Welle drehbar gelagert ist, die starr auf ihr befestigte Schnecken besitzt, welche mit den genannten Schneckenrädern im Eingriff stehen. Dabei wird eine genaue und gleichzeitige Regelung der Senkrechtbewegungsphase der Plattform gewährleistet.

Der Bewegungsantrieb des Arbeitstisches ist vorzugsweise in Form eines Zahnstangentriebs ausgebildet, der mindestens eine am Arbeitstisch befestigte Zahnstange besitzt, wobei das Zahnrad des Zahnstangentriebs mit einem Paar von Wellen kinematisch verbunden ist und jeder innere Exzenter auf einer von diesen Wellen starr befestigt ist. Dies vereinfacht die Konstruktion des Antriebsmechahismus und gewährleistet einen minimalen Energieverbrauch und eine hohe Genauigkeit der relativen Arbeitsbewegungen der Maschine.

Der äussere und der innere Exzenter jedes Exzenterpaars sind vorzugsweise mittels eines Schneckentriebs miteinander verbunden, wobei die Schnecke jedes Schneckentriebs im äusseren Exzenter untergebracht ist. Hierbei wird eine einfache und genaue Regelung der gegenseitigen Stellung der Exzenter und eine zuverlässige Fixierung der Exzenter nach der Regelung sichergestellt.

Der Spindelkopf steht mit dem Mitnehmer vermittels eines Kurbelschleifengetriebes mit veränderlichem Kurbelradius in Verbindung. Dabei werden zusätzliche Varianten der Arbeitsbewegungen des Spindelkopfes in Ergänzung der Bewegungen der den Spindelkopf tragenden Plattform gewährleistet.

## Kurze Beschreibung der Zeichnungen

Nachstehend wird eine eingehende Beschreibung der vorliegenden Erfindung angeführt, die durch beigefügte Zeichnungen veranschaulicht wird, in denen es zeigen:

Fig. 1 die Gesamtansicht der Fräsmaschine entsprechend der Erfindung im Querschnitt;

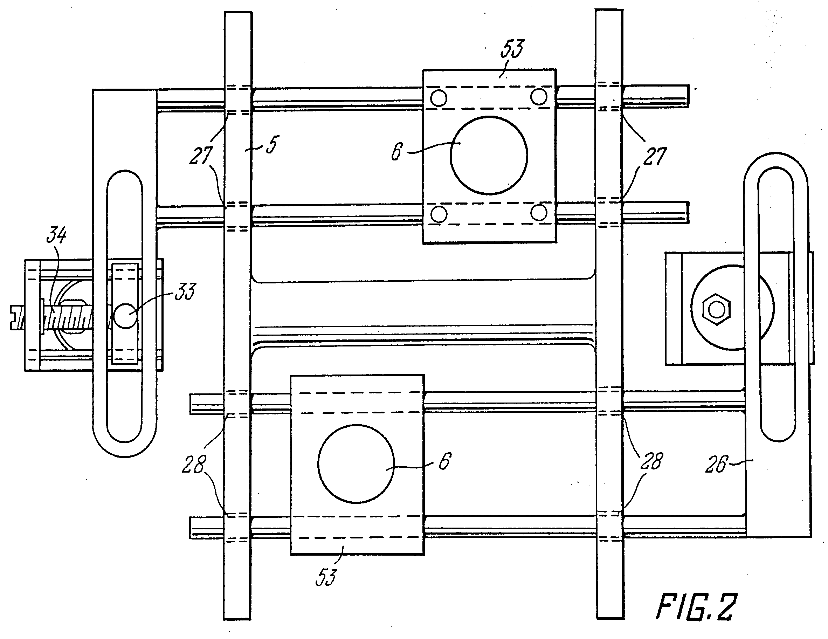

Fig. 2 eine Ansicht A. von Fig. 1 (einige Baugruppen und -teile der Maschine sind bedingt nicht abgebildet);

Fig. 3 einen Schnitt nach Linie III - III der Fig. 1;

Fig. 4 eine Konstruktionsvariante eines Teils der in Fig. 1 gezeigten Vorrichtung zur Gewährleistung der Relativbewegung von Arbeitstisch und Plattform;

Fig. 5 - 20 verschiedene Regelungen der Vorrichtung zur Gewährleistung der Relativbewegung von Arbeitstisch und Plattform und diesen Regelungen entsprechende Bilder, die bei der Werkstückbearbeitung hergestellt werden, wobei in den Figuren 6, 8, 10, 12, 14, 16 und 18 im oberen Teil jeder Zeichnung ein Bild bei unbeweglichem Arbeitstisch und im unteren Teil ein Bild bei Bewegung des Arbeitstisches gezeigt ist.

## Beste Ausführungsformen der Erfindung

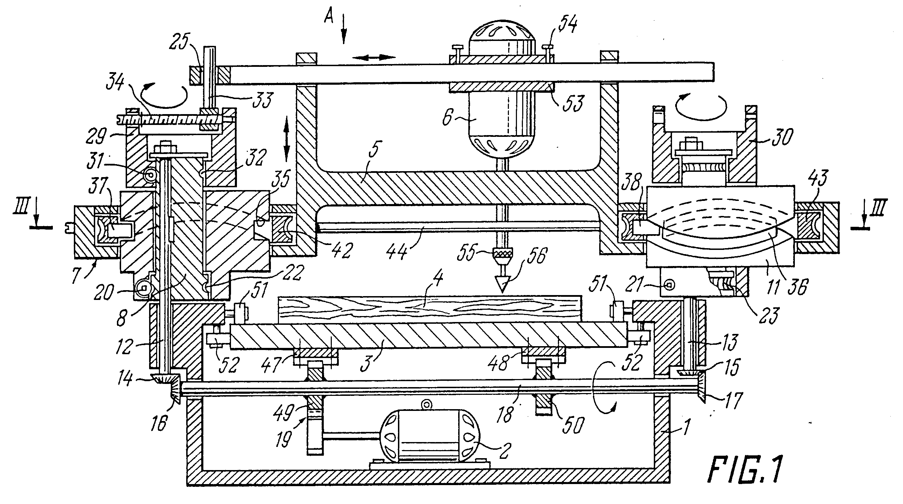

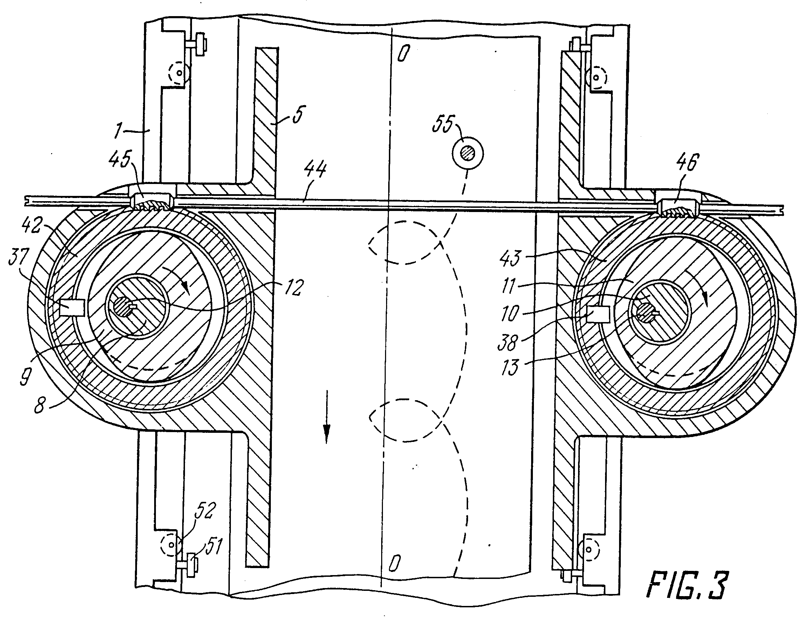

Die Fräsmaschine gemäss der Erfindung besitzt ein Bett 1, in dessen unterem Teil ein Reversierantrieb 2 installiert ist, der mit einem Arbeitstisch 3 in kinematischer Verbindung steht, welcher am Bett 1 bewegbar auf einer Bahn entlang der Längsachse 0 - 0 der Maschine (Fig. 3) angeordnet ist und (nicht gezeigte) Aufspannelemente für ein Werkstück 4 besitzt. Auf dem Bett 1 ist eine bewegliche Plattform 5 montiert. Die Plattform 5 ist relativ zum Bett 1 bewegbar und trägt zwei Spindelköpfe 6. Die Maschine hat eine Vorrichtung 7 zur Gewährleistung der Relativbewegung von Arbeitstisch 3 und Plattform 5. Die Vorrichtung 7 weist zwei Paare von Exzentern 8, 9 und 10, 11 (Fig. 1, 3) auf, die zu beiden Seiten der Bewegungsbahn 0 - 0 des Arbeitstisches 3 angebracht sind. Die inneren Exzenter 8 und 10 sind auf senkrechten Wellen 12, 13 starr befestigt, die an ihren freien Enden Kegelräder 14, 15 besitzen, welche mit Kegelrädern 16, 17 im Eingriff stehen, die auf einer waagerechten Welle 18 sitzen, welche über ein Zahnradreduziergetriebe 19 (das einen Räderkasten oder ein stufenloses Getriebe darstellen kann) mit dem Antrieb 2 verbunden ist.

Die äusseren Exzenter 9, 11 sind auf den inneren Exzentern 8, 10 drehbar angeorndet. Die Verbindung zwischen den äusseren Exzentern 9, 11 und den inneren Exzentern 8, 10 erfolgt über Schneckentriebe, die Schnecken 20, 21 darstellen, welche in den äusseren Exzentern 9, 11 drehbar gelagert und mit an den inneren Exzentern 8, 10 erzeugten Schneckenrädern 22, 23 im Eingriff sind. Bei einem solchen Aufbau wird die Drehung der äusseren Exzenter 9, 11 relativ zu den inneren Exzentern 8, 10 zwecks Regelung und eine zuverlässige Fixierung ihrer gegenseitigen Stellung nach der Regelung sichergestellt. Selbstverständlich sind auch andere Ausführungsvarianten des Mechanismus zur Regelung der gegenseitigen Stellung der äusseren Exzenter 9, 11 und der inneren Exzenter 8, 10 möglich, jedoch ist die vorstehend beschriebene Ausführungsform besonders bevorzugt. Die geschilderte Konstruktion gewährleistet beliebige Kombinationen der Exzentrizitäten des äusseren und des inneren Exzenters jedes Paars von ihrer Koinzidenz auf einer Linie, wenn die vollständige Exzentrizität gleich der Summe der Exzentrizitäten zweier Exzenter ist, bis hin zu einer solchen Lage, bei welcher die Gesamtexzentrizität der Differenz der Exzentrizitäten zweier Exzenter gleich sein wird (beispielsweise gleich Null bei der Gleichheit zweier Exzentrizitäten). Dabei bestimmt die Grösse der summarischen Exzentrizität die Bewegungsamplitude der Plattform 5.

Die Spindelköpfe 6 sind auf der Plattform 5 verschiebbar an in Führungsbohrungen 27, 28 der Plattform 5 angeordneten Schleifen 25, 26 montiert, und jeder Spindelkopf 6 besitzt eine Vorrichtung zu seiner Verschiebung relativ zur Plattform 5. Diese Vorrichtung stellt einen Mitnehmer 29 (30) dar, der auf dem inneren Exzenter 8(10) mit Möglichkeit der Drehung und Fixierung seiner Lage in bezug auf den inneren Exzenter angeordnet ist. Zu diesem Zweck besitzt der Mitnehmer 29 (30) eine Schnekke 31, die im inneren Exzenter 8 (10) drehbar gelagert und mit einem am inneren Exzenter 8 (10) erzeugten Schneckenrad 32 im Eingriff ist. Bei einem solchen Aufbau wird die Drehung des Mitnehmers 29 (30) relativ zum inneren Exzenter 8 (10) zwecks Regelung und eine zuverlässige Fixierung ihrer gegenseitigen Lage nach der Regelung sichergestellt. Selbstverständlich sind auch andere Ausführungsvarianten des Mechanismus zur Regelung der gegenseitigen Stellung des Mitnehmers 29 (30) und des inneren Exzenters 8 (10) möglich, jedoch ist die vorstehend beschriebene Ausführungsform besonders bevorzugt. Bei dieser Konstruktion der Vorrichtung zur Verschiebung des Spindelkopfes 6 ändert sich die Verschiebungsphase des Spindelkopfes 6 relativ zur Plattform 5 in Abhängigkeit von der Winkelstellung des Mitnehmers 29 (30) in bezug auf den inneren Exzenter 8 (10), wie weiter unten aufgezeigt wird.

In dieser Variante besitzt einer der Spindelköpfe 6 die Vorrichtung zu seiner Verschiebung relativ zur Plattform 5 mit einer Kurbel 33, die auf dem Mitnehmer 29 angeordnet und mit der Schleife 25 gelenkig verbunden ist. Die Kurbel 33 ist auf dem Mitnehmer 29 mit Hilfe einer Verstellschraube 34 angeordnet, die mit dem (nicht bezeichneten) Innengewinde der Kurbel 33 zusammenwirkt. Die Verstellschraube 34 ist im Mitnehmer 29 drehbar angeordnet. Dabei bildet die Schraube 34 mit dem Mitnehmer 29, der Kurbel 33 und der Schleife 25 ein Kurbelschleifengetriebe mit veränderlichem Kurbelradius. Bei einem solchen Aufbau wird eine Regelung der Neigung der Elemente eines auf dem Werkstück 4 gebildeten Bildes sichergestellt, wie nachstehend aufgezeigt wird. Selbstverständlich kann über eine derartige Vorrichtung auch der zweite Spindelkopf verfügen.

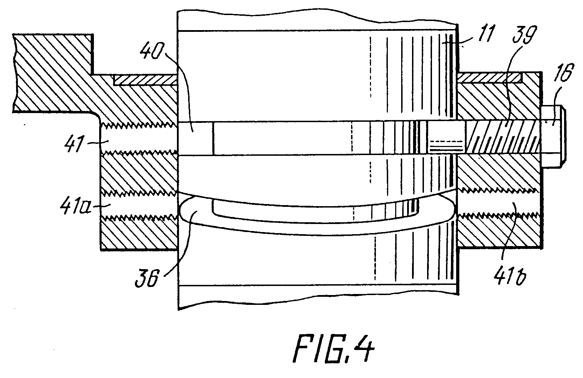

Wie aus Fig. 1 erkennbar ist, weisen die äusseren Exzenter 9, 11 Kurvenflächen 35, 36 auf der Aussenfläche auf, die einen Anstieg in der zur Fläche des Arbeitstisches 3 senkrechten Richtung haben. Die Plattform 5 besitzt an ihr befestigte Mitnehmer 37, 38 (39) zum Zusammenwirken mit den Kurvenflächen 35, 36 (Fig. 1, 4). In einem speziellen Fall (Fig. 4) kann anstelle der Kurvenfläche eine Ringnut 40 ohne Kurvenanstieg im äusseren Exzenter 9, 11 eingearbeitet sein, welche Ringnut mit einem in einer Gewindebohrung 41 der Plattform 5 eingesetzten Mitnehmer 39 zusammenwirkt. Wie in Fig. 4 gezeigt ist, können die äusseren Exzenter 9, 11 gleichzeitig sowohl die Kurvenflächen 35, 36 als auch die Ringnuten 40 aufweisen. Bei Vorhandensein der Kurvenflächen 35, 36 führt die Drehung der äusseren Exzenter 9, 11 zu Vertikalverschiebungen der Mitnehmer 37, 38 und zu Senkrechtbewegungen der Plattform 5.

Wie in Fig. 1, 3 ersichtlich ist, sind die Mitnehmer 37, 38 in Schneckenrädern 42, 43 starr befestigt, die zur gemeinsamen Bewegung mit der Plattform 5 und drehbar relativ zu dieser angeordnet sind. In der Plattform 5 ist eine Welle 44 drehbar gelagert, auf welcher Schnecken 45, 46 starr befestigt (bzw. erzeugt) sind, die sich mit den Schneckenrädern 42, 43 im Eingriff befinden. Hierbei führt die Drehung der Welle 44 zur Drehung der Schneckenräder 42, 43 relativ zu den äusseren Exzentern 9, 11 und zur Änderung der Stellung der Mitnehmer 37, 38 in bezug auf die Kurvenflächen 35, 36 zum Verandern der Phase der Senkrechtbewegung der Plattform 5 relativ zum Arbeitstisch 3. In der in Fig. 4 gezeigten Variante gewährleistet das Umsetzen des Mitnehmers in die Bohrungen 41a, 41b eine Änderung der Phase der Senkrechtbewegung der Plattform 5 relativ zum Arbeitstisch 3. Das Ergebnis einer solchen Änderung der Phase der Senkrechtbewegung der Plattform 5 wird nachstehend aufgezeigt.

Wie in Fig. 1 gezeigt ist, erfolgt der Antrieb des Arbeitstisches 3 mittels eines Zahnstangentriebes, der zwei Zahnstangen 47, 48 besitzt, welche an der nichtarbeitenden Oberfläche des Tisches 3 befestigt und parallel zur Bewegungsbahn des Tisches 3 oder zur Achse 0 - 0 (Fig. 3) angeordnet sind. Die Zahnstangen befinden sich mit Zahnrädern 49, 50 im Eingriff, die auf der waagerechten Welle 18 angeordnet sind, welche mit dem Antrieb 2 der Maschine wie vorstehend beschrieben in Verbindung steht. Der Arbeitstisch 3 ist am Bett 1 mit Hilfe von Führungsrollen 51, 52 montiert. Bei solch einer Antriebskonstruktion vollführt der Arbeitstisch eine geradlinige Bewegung relativ zum Bett 1. Dabei wird gewährleistet, dass auf dem Werkstück 4 ein sich wiederholendes Bild mit einer Periode (einem Rapport) hergestellt wird, die durch die Geschwindigkeit der geradlinigen Bewegung des Arbeitstisches 3 gegeben ist.

Der Spindelkopf 6 (Fig. 1) besitzt eine Einrichtung zur Regelung seiner Lage in bezug auf die Schleife (25, 26), wobei die Einrichtung beispielsweise ein Schlitten 53 mit Feststellern 54 ist. Ausserdem hat der Spindelkopf 6 ein Futter 55 zur Befestigung eines Arbeitswerkzeugs 56, z.B. eines Fräsers zur Bearbeitung des Werkstücks 4.

Die vorstehend beschriebene Fräsmaschine arbeitet folgenderweise.

Vor dem Arbeitsbeginn stellt man den Fräser 56 in der gewünschten Höhe ein und wählt die erforderliche Stellung des Spindelkopfes 6 durch Verstellung des Schlittens 53 auf der Schleife 25 und Fixierung desselben mittels der Feststeller 54. Beim Einschalten des Antriebs 2 findet eine (durch die Bauart des Getriebes 19 oder das nicht dargestellte Antriebssteuerungssystem bestimmte) fortschreitende oder hin- und hergehende Längsbewegung des Tisches 3 über den Zahnstangentrieb 47-50 statt. Dabei kommt es zur Längsbewegung des Werkstücks 4.

Der Umlauf der Welle 18 bewirkt die Drehung der inneren Exzenter 8, 10, die die Drehbewegung zu den äusseren Exzentern 9, 11 über die Schneckentriebe 20, 22 und 21, 23 übertragen. Hierbei vollführt die Plattform 5 eine kreisförmige Bewegung relativ zum Tisch 3, wenn die Summen der Exzentrizitäten der Exzenter 8, 9 und 10, 11 nicht gleich Null sind. Begreiflicherweise führt ebensolche Kreisbewegungen zusammen mit der Plattform 5 auch das Werkzeug 56 jedes Spindelkopfes 6 aus.

Der Mitnehmer 29, der mit dem inneren Exzenter 8 mittels des Schneckentriebs 31, 32 in Verbindung steht, versetzt die Kurbel 33 in Drehung, die eine hin- und hergehende Bewegung der Schleife 25 und zusammen mit ihr des Spindelkopfes 6 relativ zur Plattform 5 hervorruft. Somit vollführt der Spindelkopf 6 im allgemeinen Fall eine kreisförmige Bewegung relativ zum Arbeitstisch 3 zusammen mit der Plattform 5 und eine hin-und hergehende Bewegung relativ zu der Plattform 5 und dem Arbeitstisch 3.

Bei Vorhandensein der Ringnut 40 (Fig. 4) in den äusseren Exzentern führt die Plattform 5 keine Senkrechtbewegungen aus. Bei Vorhandensein der Kurvenfläche 35, 36 und Einsetzen des Mitnehmers 39 in eine der Bohrungen 41a, 41b (Fig. 4) oder bei der Zusammenwirkung der Mitnehmer 37, 38 mit den Kurvenflächen 35, 36 vollführt die Plattform 5 eine hin- und hergehende Senkrechtbewegung relativ zum Arbeitstisch 3 zusammen mit den Spindelköpfen 6, was zu Änderungen der Tiefe des Reliefs des vom Fräser 56 im Werkstück 4 gebildeten Bildes führt.

Aus der im vorstehenden angeführten Beschreibung ist zu erkennen, dass die die Spindelköpfe 6 tragende Plattform 5 eine Kreisbewegung und eine hin- und hergehende Senkrechtbewegung relativ zum Arbeitstisch 3 ausführt, während der Spindelkopf 6 eine Min- und Herbewegung relativ zu der Plattform 5 und dem Arbeitstisch 3 vollführt. Es ist offensichtlich, dass die beiden Spindelköpfe 6 eine Vorrichtung für hin- und hergehende Bewegung besitzen können. Alle genannten Bewegungen erfolgen rein mechanisch von den Vorrichtungen 7.

Nachstehend werden einige Regelungen beim Einstellen der erfindungsgemässen Fräsmaschine zum besseren Verstehen der Arbeit der Vorrichtung 7 und zur besseren Vorstellung von den Möglichkeiten der Maschine beschrieben.

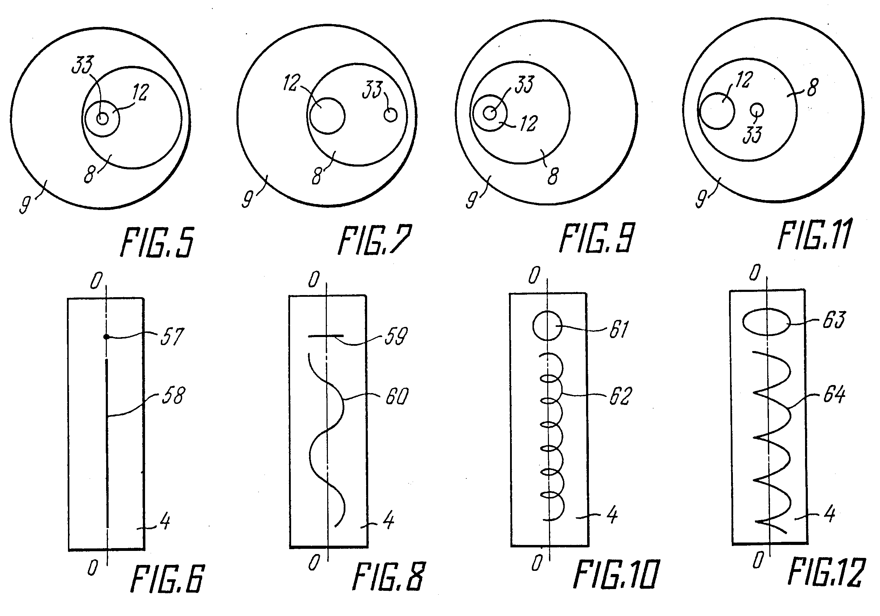

Wie in Fig. 5 gezeigt, ist die summarisch Exzentrizität der Exzenter 8, 10, die durch den Schneckentrieb 20, 22 geregelt wird, gleich Null, ist der Radius der Kurbel 33, dar durch Die Schraube 34 geregelt wird, gleich Null, und ist die Phase der Kurbel 33, die durch den Schneckentrieb 31, 32 geregelt wird, gleich Null. Dabei entsteht, wie dies Fig. 6 zeigt, auf dem Werkstück 4 ein Punkt 57 bei dem unbeweglichen Arbeitstisch 3 und/oder eine längsverlaufende Gerade 58 bei der Bewegung des Arbeitstisches 3.

Wie in Fig. 7 gezeigt, ist die summarische Exzentrizität der Exzenter 8, 10, die durch den Schneckentrieb 20, 22 geregelt wird, gleich Null, ist der Radius der Kurbel 33, der durch die Schraube 34 geregelt wird, maximal, und ist die Phase der Kurbel 33, die durch den Schneckentrieb 31, 32 geregelt wird, gleich Null. Dabei entsteht, wie dies Fig. 8 zeigt, auf dem Werkstück 4 eine querliegende Gerade 59 bei dem unbeweglichen Arbeitstisch 3 und eine Sinuskurve 60 bei der Bewegung des Arbeitstisches 3.

Wie in Fig. 9 gezeigt, ist die summarische Exzentrizität der Exzenter 8, 10, die durch den Schneckentrieb 20, 22 geregelt wird, maximal, ist der Radius der Kurbel 33, der durch die Schraube 34 geregelt wird, gleich Null, und ist die Phase der Kurbel 33, die durch den Schneckentrieb 31, 32 geregelt wird, gleich Null. Dabei entsteht, wie dies Fig. 10 zeigt, auf dem Werkstück 4 ein Kreis 61 bei dem unbeweglichen Arbeitstisch 3 und eine längsverlaufende zykloidenähnliche Linie 62 bei der Bewegung des Arbeitstisches 3.

Wie in Fig. 11 gezeigt, ist die summarische Exzentrizität der Exzenter 8,10, die durch den Schneckentrieb 20, 22 geregelt wird, maximal, ist der Radius der Kurbel 33, der durch die Schraube 34 geregelt wird, gleich Null, und ist die Phase der Kurbel 33, die durch den Schneckentrieb 31, 32 geregelt wird, gleich Null. Dabei entsteht, wie dies Fig. 12 zeigt, auf dem Werkstück 4 eine Ellipse 63 mit dem querliegenden grössten Durchmesser bei dem unbeweglichen Arbeitstisch 3 und eine längsverlaufende periodische Parabel 64 bei der Bewegung des Arbeitstisches 3.

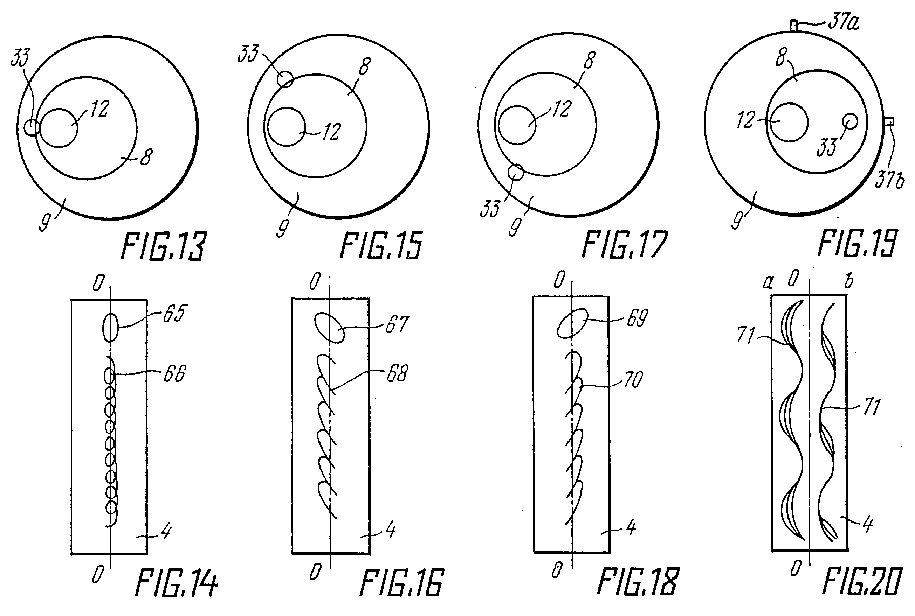

Wie in Fig. 13 gezeigt, ist die summarische Exzentrizität der Exzenter 8,10, die durch den Schneckentrieb 20, 22 geregelt wird, maximal, ist der Radius der Kurbel 33, der durch die Schraube 34 geregelt wird, gleich Null, und ist die Phase der Kurbel 33, die durch den Schneckentrieb 31, 32 geregelt wird, gleich 180°. Dabei entsteht, wie dies Fig. 14 zeigt, auf dem Werkstück 4 eine Ellipse 65 mit dem längsliegenden grössten Durchmesser bei dem unbeweglichen Arbeitstisch 3 und eine längsverlaufende zykloidenähnliche Linie 66 bei der Bewegung des Arbeitstisches 3.

Wie in Fig. 15 gezeigt, ist die summarische Exzentrizität der Exzenter 8, 10, die durch den Schneckentrieb 20, 22 geregelt wird, maximal, ist der Radius der Kurbel 33, der durch die Schraube 34 geregelt wird, maximal, und ist die Phase der Kurbel 33, die durch den Schneckentrieb 31, 32 geregelt wird,gleich 270°. Dabei entsteht, wie dies Fig. 16 zeigt, auf dem Werkstück 4 eine Ellipse 67 mit dem geneigt angeordneten grössten Durchmesser bei dem unbeweglichen Arbeitstisch 3 und eine längsverlaufende periodische Parabel 68 mit der Neigung der Bildelemente nach derselben Seite hin bei der Bewegung des Arbeitstisches 3.

Wie in Fig. 17 gezeigt, ist die summarische Exzentrizität der Exzenter 8, 10, die durch den Schneckentrieb 20, 22 geregelt wird, maximal, ist der Radius der Kurbel 33, der durch die Schraube 34 geregelt wird, maximal, und ist die Phase der Kurbel 33, die durch den Schneckentrieb 31, 32 geregelt wird, gleich 90°. Dabei entsteht,wie dies Fig. 18 zeigt, auf dem Werkstück 4 eine Ellipse 69 mit dem geneigt angeordneten grössten Durchmesser bei dem unbeweglichen Arbeitstisch 3 und eine längsverlaufende periodische Parabel 70 mit der Neigung der Bildelemente nach derselben Seite hin bei der Bewegung des Arbeitstisches 4. Die Neigung der Ellipse und der Elemente der periodischen Parabel ist in diesem Fall zur Neigung in Fig. 16 entgegengesetzt.

Wie in Fig. 19 gezeigt, entsprechen die Regelungen der Vorrichtung 7 den in Fig. 7 dargestellten, und bei der Bewegung des Arbeitstisches 3 entsteht eine Sinuskurve 71 (Fig. 20). In dieser Variante beteiligen sich an der Arbeit die Kurvenflächen 35, 36 und die Mitnehmer 37, 38, wodurch sich die Tiefe des Bildes verändert und ein Relief gebildet wird. Eine Variante (a) in Fig. 20 ergibt sich bei der Einstellung des Mitnehmers 37 (38) in der Phase 0° (Fig. 19) und eine Variante (b) - bei der Einstellung des Mitnehmers 37 (38) in der Phase 90° (Fig. 19).

Vorstehend wurden Regelungsvarianten mit den Extremlagen der Teile der Vorrichtung 7 beschrieben. Es ist augenscheinlich, dass eine stetige Änderung der gegenseitigen Stellungen dieser Teile in Kombination mit der an sich bekannten stetigen oder stufenweisen Regelung der Geschwindigkeit des Antriebs 2 sowie mit der an sich bekannten stetigen oder stufenweisen Regelung der Zustellung der Spindelköpfe die Möglichkeit bietet, eine unzählige Menge von Bildvarianten auf dem Werkstück 4 zu erhalten.

Aus der angeführten Beschreibung geht unverkennbar hervor, dass die Fräsmaschine gemäss der Erfindung verschiedenste Kombinationen der Arbeitsbewegungen der Plattform und der Spindelköpfe zu erzielen erlaubt, was eine unzählige Menge von Bildern und Reliefs auf einfachem, rein mechanischem Wege ermöglicht.

Gewerbliche Verwertbarkeit

Die Erfindung kann im Maschinenbau, bei der Holzbearbeitung und auf anderen Gebieten zur Herstellung von Nuten, Reliefs, Bildern u.dg. Anwendung finden. Die Hauptverwendung der Fräsmaschine entsprechend der vorliegenden Erfindung besteht in der Herstellung von sich regelmässig wiederholenden Bildern.

**Patentansprüche**

**1.** Fräsmaschine,die ein Bett (1), einen Arbeitstisch (3) zur Aufspannung von Werkstücken (4), der auf dem Bett bewegbar angeordnet und einen Antrieb (2) zur Bewegung relativ zum Bett (1) besitzt, eine Plattform (5), die bewegbar relativ zum Bett (1) montiert ist und mindestens einen zur Befestigung des Arbeitswerkzeuges (56) bestimmten Spindelkopf (6) trägt, und eine Vorrichtung (7) zur Gewährleistung der Relativbewegung von Arbeitstisch (3) und Plattform (5) enthält, dadurch **gekennzeichnet,** dass die Vorrichtung (7) zur Gewährleistung der Relativbewegung von Arbeitstisch (3) und Plattform (5) in Form mindestens zweier Exzenterpaare (8, 10; 9,11) ausgeführt ist, die zu beiden Seiten der Bewegungsbahn (0-0) des Arbeitstisches (3) angebracht sind,wobei der eine, der innere Exzenter (8, 10) jedes Paars innerhalb des anderen, in der den Spindelkopf (6) tragenden Plattform (5) befindlichen äusseren Exzenters (9, 11) mit Möglichkeit der Drehung und Fixierung seiner Lage in bezug auf den äusseren Exzenter (9, 11) angeordnet und mit dem Bewegungsantrieb (2) des Arbeitstisches (3) relativ zum Bett (1) kinematisch verbunden ist.

**2.** Fräsmaschine nach Anspruch 1, dadurch **gekennzeichnet,** dass die äusseren Exzenter (9, 11) in der Plattform (5) mit Möglichkeit der Drehung und Fixierung ihrer Lage in bezug auf die Plattform (5) angeordnet sind.

**3.** Fräsmaschine nach Anspruch 1, 2, dadurch **gekennzeichnet,** dass die äusseren Exzenter (9, 11) kinematisch miteinander verbunden sind.

**4.** Fräsmaschine nach den Ansprüchen 1 bis 3, dadurch **gekennzeichnet,** dass jeder äussere Exzenter (9, 11) mit einer aussenliegenden Kurvenfläche (35,36) ausgeführt ist,die einen Anstieg in der zur Fläche des Arbeitstisches (3) senkrechten Richtung aufweist, während die Plattform (5) einen daran befestigten Mitnehmer (37, 38) zum Zusammenwirken mit der genannten Kurvenfläche (35,36) besitzt.

**5.** Fräsmaschine nach den Ansprüchen 1 bis 4, dadurch **gekennzeichnet,** dass jeder äussere Exzenter (9, 11) ein Schneckenrad (42, 43) besitzt, das gemeinsam mit der Plattform (5) bewegbar und relativ zur Plattform (5) drehbar ist, und ein Mitnehmer (37, 38) in diesem Schneckenrad (42, 43) starr befestigt ist,wobei in der Platt form (5) eine Welle (44) drehbar gelagert ist, die starr auf ihr befestigte Schnekken (45, 46) besitzt, welche mit den genannten Schneckenrädern (42, 43) im Eingriff stehen.

**6.** Fräsmaschine nach den Ansprüchen 1 bis 5, dadurch **gekennzeichnet,** dass der Bewegungsantrieb des Arbeitstisches (4) in Form eines Zahnstangentriebs ausgebildet ist, der mindestens eine am Arbeitstisch (3) befestigte Zahnstange (47, 48) besitzt, wobei das Zahnrad (49, 50) des Zahnstangentriebs mit einem Paar von Wellen (12, 13) kinematisch verbunden ist und jeder innere Exzenter (8, 10) auf einer von diesen Wellen (12, 13) starr befestigt ist.

**7.** Fräsmaschine nach den Ansprüchen 1 bis 6, dadurch **geekennzeichnet,** dass der äussere und der innere Exzenter (8, 9; 10,11) jedes Exzenterpaars mittels eines Schneckentriebs (20,22; 21,23) miteinander verbunden sind, wobei die Schnecke (20, 21) jedes Schneckentriebs im äusseren Exzenter (9, 11) untergebracht ist.

**8.** Fräsmaschine nach den Ansprüchen 1 bis 7, dadurch **gekennzeichnet,** dass der Spindelkopf (6) verschiebbar relativ zur Plattform (5) in der zur Bewegungsbahn (0-0) des Arbeitstisches senkrechten Richtung angeordnet ist und eine Vorrichtung (29, 33,25) zu seiner Verschiebung relativ zur Plattform (5) besitzt, welche Vorrichtung mit einem der Exzenter (8) in kinematischer Verbindung steht.

**9.** Fräsmaschine nach Anspruch 8, dadurch **gekennzeichnet,** dass die Vorrichtung zur Verschiebung des Spindelkopfes (6) relativ zur Plattform (5) einen Mitnehmer (29) enthält, der auf dem inneren Exzenter (8) mit Möglichkeit der Drehung und Fixierung seiner Lage in bezug auf den inneren Exzenter (8) angeordnet ist.

**10.** Fräsmaschine nach Anspruch 9, dadurch **gekennzeichnet,** dass der Mitnehmer (29) mit dem Spindelkopf (6) mittels eines Kurbelschleifengetriebes (33, 25) mit veränderlichem Radius der Kurbel (33) in Verbindung steht.

III
43
36
11
23
30
13
15
17
1
21
38
52
51
50
54
53
56
55
48
18
2
6
44
4
3
5
A
42
35
22
51
47
49
19
33
32
52
25
34
29
31
37
20
8
12
14
16
7
III

FIG.1

FIG.2
26
27
28
53
6
5
33
34

FIG.3
46
43
11
10
38
13
55
0
0
44
5
12
1
45
52
51
42
37
9
8

40
11
39
16
41
41a
36
41b

FIG.4

FIG.5
33
12
8
9
FIG.6
57
58
4
0
0
FIG.7
33
12
8
9
FIG.8
59
60
4
0
0
FIG.9
33
12
8
9
FIG.10
61
62
4
0
0
FIG.11
8
12
33
9
FIG.12
63
64
4
0
0

FIG.13
FIG.14
FIG.15
FIG.16
FIG.17
FIG.18
FIG.19
FIG.20
37a
37b
33
12
8
9
4
0
65
66
67
68
69
70
71
a
b

## INTERNATIONAL SEARCH REPORT

International Application No PCT/SU 91/00249

**I. CLASSIFICATION OF SUBJECT MATTER** (if several classification symbols apply, indicate all) [6]

According to International Patent Classification (IPC) or to both National Classification and IPC

Int.Cl.5 B23C I/00, 3/00, B27C 5/00

**II. FIELDS SEARCHED**

Minimum Documentation Searched [7]

| Classification System | Classification Symbols |
|---|---|
| Int.Cl.5 | B23C I/00, 3/00, 3/16, 3/28, B27C 5/00 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | SU, AI, 1013129 (KHERSONSKY INDUSTRIALNY INSTITUT) 23 April 1983 (23.04.83) --- | 1 |
| A | DE, Al, 2543182 (VERMONT AMERICAN CORP.) 22 April 1976 (22.04.76) --- | 1 |
| A | DE, Al, 3333965 (VACOM S.R.L.) 22 April 1984 (22.04.84) --- | 1 |
| A | US, A, 4605049 (GIOVANNI GIORDANENGO) 12 August 1986 (12.08.86) --- | 1 |
| A | US, A, 4787430 (KOUICHI MIYAMOTO) 29 November 1988 (29.11.88) --- | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 20 February 1992 (20.02.92) | 2 April 1992 (02.04.92) |
| **International Searching Authority** | **Signature of Authorized Officer** |
| ISA/SU | |